# EUROPÄISCHE PATENTSCHRIFT

(11) **EP 4 161 753 B1**
(45) Veröffentlichungstag und Bekanntmachung des Hinweises auf die Patenterteilung: **30.09.2026**
(21) Anmeldenummer: 21770135.8
(22) Anmeldetag: 25.08.2021
(51) Int. Cl.: B29C 45/00, B29C 45/14, B29C 45/17, B62K 19/16, B62K 19/30, B29K 705/00, B29L 31/30

(54) **VERFAHREN ZUR HERSTELLUNG EINES ZWEIRADRAHMENS**
PROCESS FOR PRODUCING A TWO-WHEELER FRAME
PROCÉDÉ DE FABRICATION D'UN CADRE DE DEUX ROUES

(30) Priorität: 10.12.2020 DE 102020133019
(43) Veröffentlichungstag der Anmeldung: 12.04.2023
(73) Patentinhaber: Plastic Innovation GmbH, 4100 Ottensheim (AT)
(72) Erfinder: CAKMAK, Umut, 2340 Mödling (AT); WOLFSBERGER, Christian, 4100 Ottensheim (AT)
(74) Vertreter: Lorenz Seidler Gossel Part. mbB
(86) Internationale Anmeldenummer: PCT/EP2021/073474
(87) Internationale Veröffentlichungsnummer: WO 2022/122194

(56) Entgegenhaltungen:
- EP-A1- 3 558 622
- CN-A- 104 589 581
- DE-A1- 102015 008 561
- DE-A1- 102016 015 538
- DE-A1- 19 903 682
- HINSE CHRISTOPH ET AL: "Wasserinjektionstechnik und ihre Simulation - eine Kombination für Effizienzsteigerung", KONSTRUKTIONSPRAXIS, 16 July 2019 (2019-07-16), XP055860318, Retrieved from the Internet <URL:https://www.konstruktionspraxis.vogel.de/wasserinjektionstechnik-und-ihre-simulation--eine-kombination-fuer-effizienzsteigerung-a-845199/> [retrieved on 20211111]

## Beschreibung

Die Erfindung betrifft ein Verfahren zur Herstellung eines Zweiradrahmens mit wenigstens einem röhrenförmigen Rahmenbestandteil.

Aus dem Stand der Technik ist bekannt, einen Zweiradrahmen mit wenigstens einem röhrenförmigen Rahmenbestandteil durch ein Spritzgießverfahren zu fertigen, bei dem zunächst eine Schmelze eines thermoplastischen Kunststoffs in eine Gussform eingespritzt wird, bevor durch eine anschließende Fluidinjektion ein Teil der Kunststoffschmelze wieder aus der Gussform verdrängt wird, um den inneren Hohlraum des röhrenförmigen Rahmenbestandteils zu bilden. In diesem Zusammenhang kann beispielsweise auf die CN 103 552 220 A, die DE 10 2016 015 538 A1 oder die DE 10 2015 008 561 A1 verwiesen werden.

Aufgabe der Erfindung ist es, diese Verfahren mit Blick in einer Weise zu optimieren, dass Prozesseffizienz und Produktqualität verbessert werden.

Vor diesem Hintergrund betrifft die Erfindung ein Verfahren zur Herstellung eines Zweiradrahmens mit wenigstens einem röhrenförmigen Rahmenbestandteil, wobei das Verfahren ein Spritzgießverfahren umfasst, bei dem zunächst eine Schmelze eines thermoplastischen Kunststoffs durch wenigstens einen Kunststoffinjektionspunkt in eine Kavität eines Spritzgießwerkzeugs eingespritzt wird, bevor durch eine anschließende Fluidinjektion durch wenigstens einen Fluidinjektionspunkt ein Teil der Kunststoffschmelze wieder durch wenigstens einen Auslass aus der Kavität verdrängt wird, um den inneren Hohlraum des röhrenförmigen Rahmenbestandteils zu bilden.

Erfindungsgemäß ist vorgesehen, dass der Fluidinjektionspunkt am Spritzgießwerkzeug unterhalb des Auslasses für die verdrängte Kunststoffschmelze liegt, sodass das Fluid im Rahmen des Verdrängungsvorgangs aufwärts fließt.

Konkret sind die Form der Kavität und die Positionen des Auslasses und des Fluidinjektionspunkts am Spritzgießwerkzeug derart, dass das Fluid im Rahmen des Verdrängungsvorgangs durchgängig aufwärts fließt. Mit anderen Worten ist also bevorzugt, dass nicht nur die durchschnittliche Flussrichtung des Fluids nach oben zeigt, wie es bei einer Anordnung des Auslasses oberhalb des Fluidinjektionspunkts notwendigerweise der Fall ist, sondern dass das Fluid im Spritzgießwerkzeug bzw. eingeformten Rahmengebilde tatsächlich durchgehend nach oben fließt und nicht zwischendurch waagrecht oder gar abwärts.

Soweit am Spritzgießwerkzeug mehrere Auslässe für die verdrängte Kunststoffschmelze vorgesehen sind, sind vorzugsweise alle diese Auslässe oberhalb des Injektionspunktes angeordnet. Es können auch mehrere Injektionspunkte vorgesehen sein, um eine Kunststoffschmelze aus unterschiedlichen Abschnitten des Rahmens zu verdrängen, und ein oder mehrere Auslässe können mit jedem der Injektionspunkte im Rahmen der Verdrängung von Kunststoff aus einem bestimmten Rahmenbereich zusammenwirken. In diesen Fällen ist vorzugsweise vorgesehen, dass für alle zusammenwirkenden Paare von Injektionspunkten und Auslässen gilt, dass die Injektionspunkte unterhalb des Auslasses angeordnet sind.

Die Kernidee der Erfindung ist also ein Aufwärtsfließen des Fluids im Spritzgießwerkzeug bzw. im Kern des eingeformten Rahmengebildes. Die Kunststoffschmelze wird gegen die Schwerkraft nach oben aus der Kavität bzw. aus dem eingeformten Rahmengebilde gedrückt. Durch die Wahl dieser Flussrichtung konnte in der Praxis die Bildung von Fluideinschlüssen in den fertigen Rahmenteilen weitgehend vermieden werden.

An den Injektionspunkten weist das Spritzgießwerkzeug geeignete Injektionsdüsen für das Fluid. Bei dem Fluid kann es sich um eine Flüssigkeit, beispielsweise um Wasser, oder um ein Gas, beispielsweise um Luft handeln. Der Einsatz einer Flüssigkeit und insbesondere von Wasser kann aufgrund der fehlenden Kompressibilität in einer Ausführungsform bevorzugt sein.

Bevorzugt kann in einer Ausführungsform der Erfindung die sequentielle Injektion zweier Fluide sein. Beispielsweise kann sequentiell zuerst ein beispielswiese komprimiertes Gas, wie etwa komprimierte Luft, und dann eine Flüssigkeit, wie etwa Wasser injiziert werden. Die Flüssigkeit schiebt dann eine Gasblase vor sich her. Ein Vorteil eines solchen Vorgehens kann sein, dass die Gasvorlage als Isolationsschicht zwischen der heißen Kunststoffschmelze und der Flüssigkeit dienen kann.

An die Auslässe können sich Überlaufkavitäten oder, sofern ein Masserückdrückverfahren vorgesehen ist, Heißkanäle anschließen. Etwaige Überlaufkavitäten können in einer Variante des Verfahrens nach dem Spritzguss und dem Ausdrücken der überschüssigen Schmelze durch eine eigens dafür am Spritzgießwerkzeug vorgesehene Vorrichtung abgetrennt werden. Bei der Vorrichtung kann es sich beispielsweise um einen automatisch verfahrbaren Meißel oder ein automatisch verfahrbares Messer handeln.

Im Rahmen des erfindungsgemäßen Verfahrens ist vorzugsweise vorgesehen, dass auch der Kunststoffinjektionspunkt am Spritzgießwerkzeug unterhalb des Auslasses für die verdrängte Kunststoffschmelze liegt, und vorzugsweise im Bereich des Fluidinjektionspunktes liegt. Auch für die Kunststoffeinspritzung kann ein Ansteigen der Schmelze in der Kavität vorteilhaft sein. Die Vorteile kommen insbesondere dann zur Geltung, wenn die Kavität vor Beginn der Fluidinjektion nicht ganz mit Kunststoff gefüllt wird, sondern die obersten Bereiche der Kavität erst im Rahmen des Verdrängungsvorgangs mit durch die Verdrängung nachrückendem Kunststoffmaterial gefüllt werden. Es kann entweder nur ein Teil der Schmelze oder die gesamte Schmelze des thermoplastischen Kunststoffs durch diesen unterhalb des Auslasses am Spritzgießwerkzeug vorgesehenen Kunststoffinjektionspunkt in die Kavität eingespritzt werden.

In einer Ausführungsform des Verfahrens kann vorgesehen sein, dass zumindest ein Teil der Schmelze des thermoplastischen Kunststoffs durch den Auslass für die verdrängte Kunststoffschmelze in die Kavität eingespritzt wird. Somit dient der Auslass für die verdrängte Kunststoffschmelze gleichzeitig als Kunststoffinjektionspunkt. Die Einspritzung zumindest eines Teils der Schmelze an dieser vom Fluidinjektionspunkt entfernten Stelle kann eine gleichmäßige Verteilung der Schmelze in der Kavität begünstigen. Außerdem wird die Anzahl der notwendigen Zugänge und Ausgänge aus der Kavität verringert.

Bei dem im Rahmen der Erfindung hergestellten Zweiradrahmen kann es sich in einer Ausführungsform um einen Rahmen eines Fahrrads mit oder ohne Elektromotorunterstützung, beispielsweise eines Stadtfahrrads, eines Sportrads wie eines Rennrads oder eines Mountainbikes, oder eines Kinderfahrrads sein. In einer anderen Ausführungsform kann es sich auch um den Rahmen eines Mofas, eines Mopeds oder eines Motorrads handeln.

Gängige Fahrradrahmen, die auch in einer bevorzugten Ausführungsform des erfindungsgemäßen Verfahrens hergestellt werden, umfassen ein Steuerrohr, ein Unterrohr, ein Sitzrohr, zwei Kettenstreben und zwei Sitzstreben.

Das Steuerrohr befindet sich ganz vorne am Rahmen. Es handelt sich um ein kurzes, ungefähr senkrecht ausgerichtetes Rohr, durch das im zusammengebauten Zustand des Fahrrads ein Gabelschaft gesteckt ist, der das Vorderrad mit dem Lenker verbindet. Das Unterrohr schließt hinten an das Steuerrohr an und verbindet diese mit der Tretlageraufnahme bzw. im Falle von Elektrofahrrädern mit Mittelmotor mit der Motoraufnahme, das typischerweise an der tiefsten Stelle des Rahmens liegt. Das Unterrohr verläuft ausgehend vom Steuerrohr schräg nach unten und kann geradlinig oder auch leicht gebogen ausgeführt sein. Das Unterrohr ist typischerweise maßgeblich für die Stabilität des Rahmens verantwortlich, weshalb es oft einen vergleichsweise großen Durchmesser und eine vergleichsweise große Materialstärke aufweist. Das Sitzrohr verläuft ausgehend vom Bereich der Tretlager- bzw. der Motoraufnahme ungefähr senkrecht nach oben. An seinem oberen Ende ist eine Sattelstütze eingesteckt, an welcher der Sattel befestigt ist. Der Sattel kann ggf. auch direkt am Sitzrohr befestigt werden. Vielfach weist der Rahmen neben dem Unterrohr und dem Sitzrohr noch ein Oberrohr auf, welches das Steuerrohr mit dem oberen Bereich des Sitzrohres verbindet. Das Steuerrohr, das Unterrohr, das Sitzrohr und gegebenenfalls das Oberohr bilden gemeinsam den sogenannten Hauptrahmen.

Die Kettenstreben und die Sitzstreben bilden gemeinsam den in der Seitenansicht dreieckigen Hinterbau des Rahmens. Die Kettenstreben verlaufen ausgehend vom Bereich der Tretlager- bzw. der Motoraufnahme waagrecht bis leicht ansteigend nach hinten bis zu den sogenannten Ausfallenden, an denen das Hinterrad montiert ist, während die Sitzstreben die Ausfallenden mit dem oberen Bereich des Hauptrahmens verbinden, im Regelfall mit dem oberen Bereich des Sitzrohrs.

In einer besonders bevorzugten Ausführungsform der Erfindung kann das Fluid im zum Steuerrohr korrespondierenden Bereich in die Kavität eingespritzt und die verdrängte Kunststoffschmelze durch Auslässe, die in den zu den Ausfallenden der Kettenstreben oder zum oberen Ende der Sitzstreben korrespondierenden Bereichen liegen, aus der Kavität gedrückt werden. Es kann also vorgesehen sein, dass die Schmelze im Bereich der Ausfallenden aus der Kavität gedrückt wird, oder dass die Schmelze auch gleich noch durch die Sitzstreben gedrückt wird und die Kavität erst am oberen Ende der Sitzstreben im Bereich des Sitzrohres verlässt.

Die Lage des eingeformten Rahmens im Spritzgießwerkzeug entspricht in diesen Ausführungsformen vorzugsweise nicht der Lage des Rahmens im fertigen Zweirad. Vielmehr ist die Lage des eingeformten Rahmens vorzugsweise so, dass das Steuerrohr den tiefsten Punkt darstellt und die hinteren Enden der Kettenstreben die höchsten Punkte darstellen.

Der Fluidkanal splittet sich in diesen Ausführungsformen im Bereich des Sitzrohres auf. Ein als Einformteil in die Kavität eingesetztes Sitzrohr kann kausal für diese Teilung sein. In einer Ausführungsform des Verfahrens kann vorgesehen sein, dass das Fluid sequentiell durch die linken und rechten Kettenstreben und gegebenenfalls ferner die linken und rechten Sitzstreben geleitet wird.

Auch die Kunststoffschmelze kann im zum Steuerrohr korrespondierenden Bereich in die Kavität eingespritzt werden.

Alternativ kann auch vorgesehen sein, dass das Fluid und/oder der Kunststoff im Bereich des unteren Endes des Unterrohres bzw. im Bereich der Tretlager- bzw. der Motoraufnahme eingespritzt werden. Der Auslass oder die Auslässe können in diesem Fall in denjenigen Bereichen der Kavität angeordnet sein, die der Oberseite des Sitzrohres oder der dem Steuerrohr entsprechen. Die Lage des eingeformten Rahmens im Spritzgießwerkzeug kann in diesen Ausführungsformen in etwa der Lage des Rahmens im fertigen Zweirad entsprechen.

Soweit der Rahmen eine Aufnahme für einen Akku aufweisen soll, beispielsweise im Bereich des Unterrohres, wie dies bei Rahmen für Elektrofahrräder oftmals der Fall ist, sind diese Aufnahmen in der Kavität selbst oder durch einen Kern abgebildet, sodass der durch die Verdrängung der Kunststoffschmelze entstehende Fluidkanal an diesen Aufnahmen vorbeiführt. Im Falle der Abbildung durch einen Kern kommt vorzugsweise ein Kernzug zum Einsatz, um den Kern vor der abschließenden Öffnung der Hälften des Spritzgießwerkzeugs in eine Richtung normal oder quer zur Öffnungsrichtung aus der Kavität bzw. dem entstandenen Rahmen zu ziehen.

Zur Ausbildung des Steuerrohres kann in einer Ausführungsform der Erfindung ein hohles und vorzugsweise hülsenförmiges Einlegeteil in den zum Steuerrohr korrespondierenden Bereich der Kavität eingelegt und mit der Kunststoffschmelze umspritzt werden. Die Hülse kann aus Metall oder einem nicht metallischen Material gefertigt sein.

Bevorzugt kann in diesem Zusammenhang sein, dass das hohle Einlegeteil eine Öffnung aufweist und so in die Kavität eingelegt wird, dass die Öffnung einem Bereich der Kavität zugewandt ist, der zu einem Unterrohr oder einem Oberrohr des Rahmens korrespondiert. Im Falle eines hülsenförmigen Einlegeteils kann sich die Öffnung im radialen Umfangsmantel befinden. In einer Ausführungsform, vorzugsweise bei einer Lage des eingeformten Rahmens im Spritzgießwerkzeug, in welcher das Steuerrohr den tiefsten Punkt darstellt, kann dabei vorgesehen sein, dass sich ein Fluidinjektionspunkt im Bereich der eingelegten Hülse befindet und ein Flussweg für das Fluid durch den Hohlraum der Hülse und die Öffnung im Einlegeteil in das Unterrohr oder auch ein Oberrohr bis zu Auslässen an den hinteren Enden der Ketten- bzw. Sitzstreben führt. Auch dabei splittet sich der Fluidkanal auf.

Auch ein Kunststoffinjektionspunkt kann im Bereich der eingelegten Hülse angeordnet sein. Beispielsweise können Kunststoff- und Fluidinjektoren an gegenüberliegenden axialen Enden der Hülse bzw. des entsprechenden Bereichs der Kavität angeordnet sein.

In einer Ausführungsform kann im Rahmen des Verfahrens ein Sitzrohr als Einlegeteil in den entsprechenden Bereich der Kavität eingelegt und mit der Kunststoffschmelze zumindest teilweise umspritzt werden. Das Sitzrohr kann aus Metall oder einem nicht metallischen Material gefertigt sein.

Insbesondere kann in diesem Zusammenhang vorgesehen sein, dass das Sitzrohr eine oder mehrere Öffnungen im radialen Umfangsmantel aufweist und so in die Kavität eingelegt wird, dass die Öffnung oder die Öffnungen einem Bereich oder Bereichen der Kavität zugewandt ist bzw. sind, der bzw. die zu einem Unterrohr, einem Oberrohr, zu Kettenstreben oder zu Sitzstreben des Rahmens korrespondieren. Soweit die Öffnung einem Bereich der Kavität zugewandt ist, der zu einem Unterrohr oder einem Oberrohr des Rahmens korrespondiert, kann der hohle Innenraum des Sitzrohres, bei Injektion der Kunststoffschmelze und des Fluids im Bereich des Steuerrohres als Flussweg für die Kunststoffschmelze dienen. Über Öffnungen, die einem zu den Ketten- oder Sitzstreben zugewandten Bereichen der Kavität entsprechen, kann dieser Flussweg weiter bis zu Auslässen an den hinteren Enden der Streben gezeichnet werden.

Im Falle einer Lage des eingeformten Rahmens im Spritzgießwerkzeug, in welcher das Steuerrohr den tiefsten Punkt darstellt, kann auch vorgesehen sein, dass sich ein Fluidinjektionspunkt im Bereich des eingelegten Sitzrohres befindet, vorzugsweise im Bereich nahe des oberen Endes des eingelegten Sitzrohres. Ein Flussweg für das Fluid kann dann durch den Hohlraum des Sitzrohres und eine radiale Öffnung in der Sattelstütze in die beiden Sitzstreben bis zu Auslässen an den hinteren Enden der Sitzstreben, bzw. an den damit zusammenfallenden hinteren Enden der Kettenstreben führt. Auch dabei splittet sich der Fluidkanal auf.

Soweit in einer alternativen Ausgestaltung des erfindungsgemäßen Verfahrens der hintere Bereich des Unterrohres um die Tretlageraufnahme bzw. die Motoraufnahme den tiefsten Punkt des eingeformten Rahmens im Spritzgießwerkzeug darstellt, kann eine Einspritzung des Kunststoffs und/oder des Fluids auch dort erfolgen. Etwaige Hohlräume in den Einlegeteilen, also beispielsweise in der Hülse oder dem Sitzrohr, können in dieser Variante der Erfindung die Flusswege für die Kunststoffschmelze und das Fluid ergänzen.

Die Auslässe an den hinteren Enden der Sitz- bzw. Kettenstreben können also sowohl mit Fluidinjektionspunkten im Bereich des Steuerrohres als auch mit Fluidinjektionspunkten im Bereich des Sitzrohres aufwärtsgerichtete Fluidwege definieren.

Auch ein Kunststoffinjektionspunkt kann im Bereich des eingelegten Sitzrohres angeordnet sein.

In einer Ausführungsform kann ein Abschnitt des Spritzgießwerkzeugs, der denjenigen Bereich der Kavität definiert, der zu einem Oberrohr des Rahmens korrespondiert, abgekoppelt oder ausgetauscht werden, um im Rahmen eines erfindungsgemäßen Verfahrens mit demselben Spritzgießwerkzeug einen Rahmen ohne Oberrohr zu fertigen oder unterschiedliche Designs des Oberrohres zu realisieren. Insbesondere kann der entsprechende Abschnitt des Spritzgießwerkzeugs durch einen wechselbaren Werkzeugeinsatz gebildet werden. Diese Ausbildung des Spritzgießwerkzeugs ermöglich es beispielsweise, mit demselben Spritzgießwerkzeug sowohl reguläre Rahmen mit Oberrohr als auch bei Damenfahrrädern übliche Tiefeinsteiger zu fertigen.

In einer Variante der Erfindung ist vorgesehen, dass Fluidinjektoren in die Kavität ragen und teilweise mit der Kunststoffschmelze umspritzt werden. In diesem Fall ist vorzugsweise vorgesehen, dass die Fluidinjektoren mit einer thermischen Isolierschicht ausgestattet sind, beispielsweise einer Keramik- oder Teflonschicht.

In einer Variante der Erfindung ist vorgesehen, dass die entstehenden Rahmen eine Anbindung vom Heißkanal zur Bauteilkavität aufweisen, sodass über einen Kaltkanalunterverteiler die Schmelze vom Heißkanal in die Kavität gelangen kann.

Im Falle mehrerer Fluidvolumenströme sollten diese durch Wandstärken von max. 4 mm voneinander getrennt werden.

In einer Variante der Erfindung ist vorgesehen, dass ein Projektil in die Kavität eingebracht und beim Ausdrücken der Schmelze durch den Fluiddruck zumindest abschnittsweise vor dem Fluid hergetrieben wird. Ein Projektil kann das Erreichen konstanter Restwandstärken an den Rahmen begünstigen.

Für den Einsatz im Rahmen des erfindungsgemäßen Verfahrens eignen sich als Kunststoffe Polyamide, beispielsweise Polyamid 12, Polyamid 6 oder Polyamid 6.6, Polyolefine, beispielsweise Polypropylen oder Polyethylen, Polyethersulfon, Polyetherimid, Polyetherketon, Polyphenylensulfid, Polyvinylchlorid, Polyester, Acrylnitril-Butadien-Styrol (ABS), Polycarbonat/Acrylnitril-Butadien-Styrol (ABC/PC) oder Polycarbonat (PC). Besonders geeignet sind in einer Ausführungsform der Erfindung Polybutylenterephtalat oder Polyterephtalatethylen. Die Kunststoffschmelzen können zur Verbesserung der mechanischen Eigenschaften Füllstoffe wie beispielsweise Fasern aus Glas oder Carbon enthalten. Auch ein Einlegen von Carbon- oder Glasfasermatten in die Kavität kann in einer Variante der Erfindung vorgesehen sein.

Weitere Einzelheiten und Vorteile der Erfindung ergeben sich aus den nachfolgend anhand der Figuren diskutierten Ausführungsbeispielen. In den Figuren zeigen:
- Figuren 1a-1b:: eine Draufsicht und eine perspektivische Ansicht einer Hälfte eines Spritzgießwerkzeugs mit einem teilweise dargestellten, eingeformten Rahmen;
- Figur 2:: eine Darstellung einer Einlegehülse für das Steuerrohr, die radiale Öffnungen aufweist;
- Figur 3:: eine Darstellung der Flussrichtung des Fluids in der wie in Figur 1 gezeigten Variante der Erfindung;
- Figur 4:: eine Darstellung der Flussrichtung des Fluids in einer Erweiterung der in Figur 1 gezeigten Variante der Erfindung; und
- Figur 5:: eine schematische Darstellung zur möglichen Abkopplung eines zum Oberrohr eines Fahrradrahmens korrespondierenden Bereichs der Spritzgießkavität; und
- Figur 6:: eine schematische Darstellung zu einer alternativen Verfahrensführung im Rahmen der Erfindung.

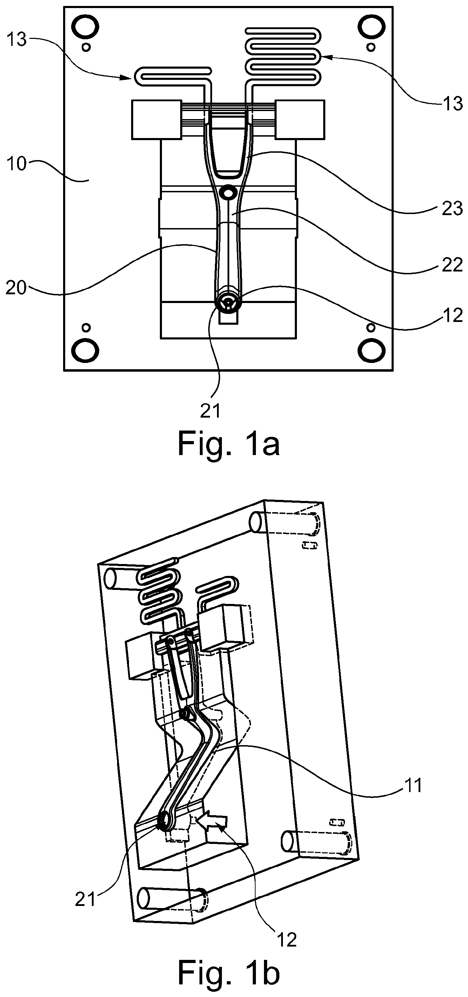

Ansichten eines Teils eines Spritzgießwerkzeugs 10 mit einem eingeformten Rahmen 20, der nur teilweise dargestellt ist, sind in Figuren 1a und 1b gezeigt.

Die dargestellten Bereiche des eingeformten Rahmens 20 umfassen ein Steuerrohr 21, ein Unterrohr 22 und zwei Kettenstreben 23. Das dargestellte Teil des Spritzgießwerkzeugs 10 umfasst eine Kavität 11 zur Ausformung der entsprechenden Bereiche des Rahmens 20, einen Fluidinjektor 12, der im zum Steuerrohr 21 korrespondierenden Bereich der Kavität 11 angeordnet ist, und zwei Überlaufkavitäten 13, die in den zu den hinteren Enden der Kettenstreben 23 korrespondierenden Bereichen der Kavität 11 angeordnet sind.

Die Positionierung des Spritzgießwerkzeugs 10 im Rahmen der Durchführung des Spritzgießverfahrens zur Herstellung des Rahmens 20 ist so, wie sie in Figuren 1a und 1b dargestellt ist. Der zum Steuerrohr 21 korrespondierende Bereich der Kavität 11 liegt also an der tiefsten Stelle und die zu den hinteren Enden der Kettenstreben 23 korrespondierenden Bereiche der Kavität 11 an der höchsten Stelle. Entsprechend ist der Fluidinjektor 12 unterhalb der Überlaufkavitäten 13 angeordnet.

Im Rahmen des Verfahrens zur Herstellung des Rahmens 20 wird zunächst eine Schmelze eines thermoplastischen Kunststoffs, beispielsweise eines Polyamids durch einen in Figuren 1a oder 1b nicht dargestellten, aber ebenfalls im zum Steuerrohr 21 korrespondierenden Bereich der Kavität 11 liegenden Kunststoffinjektor in die Kavität 11 eingespritzt, bis diese teilweise, beispielsweise bis in den Übergangsbereich zwischen Unterrohr 22 und Kettenstreben 23 gefüllt ist. Anschließend wird durch den Fluidinjektor 12 ein Fluid, beispielsweise Wasser in die Kavität 11 eingepresst. Das Fluid verdrängt die plastische Seele des zunächst massiven Kunststoffstabs, der in dem zum Unterrohr 22 korrespondierenden Bereich der Kavität 11 entstanden ist, während die an die Oberfläche der Kavität 11 direkt angrenzenden Bereiche des Stabs bereist soweit abgekühlt und ausgehärtet sind, dass dort keine Verdrängung mehr stattfindet. Das verdrängte Kunststoffmaterial füllt zunächst die noch leer gebliebenen Bereiche der Kavität 11, unter anderem die zu den Kettenstreben 23 korrespondierenden Bereiche auf. Nachdem auch diese Bereiche vollständig gefüllt sind, entweicht das verdrängte Kunststoffmaterial durch entsprechende Auslässe in die Überlaufkavitäten 13. Die Injektion des Fluids wird so lange fortgesetzt, bis alle gezeigten Rahmenbereiche, also Unterrohr 22 und Kettenstreben 23 durch die Verdrängung der plastischen Seele aus den zunächst stabförmigen Elementen rohrförmig sind. Im Anschluss endet die Fluidinjektion und das Fluid kann aus dem Kern des entstandenen Rahmens 20 entfernt, beispielsweise abgesaugt werden. In Varianten der Erfindung kann das Fluid vor seiner Entfernung auch für einen gewissen Zeitraum im Rohr verbleiben und gegebenenfalls auch darin zirkuliert werden, um die Kühlung und Aushärtung der Rohrwände des entstandenen Rahmens zu unterstützen. Der fertige Rahmen 20 wird dann entformt.

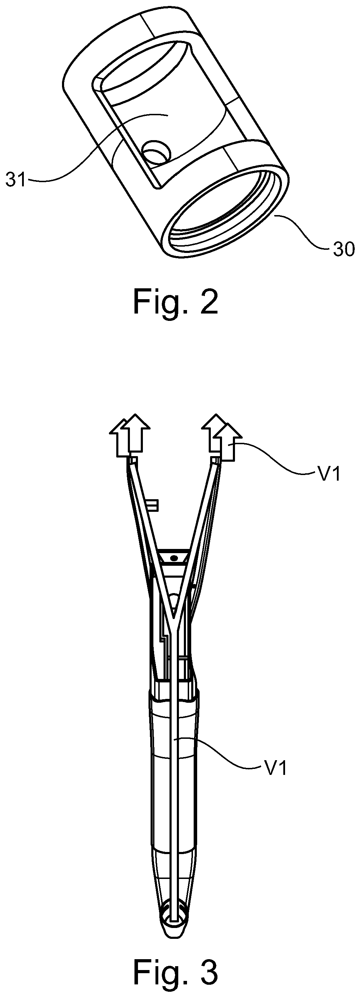

In den zum Steuerrohr 21 korrespondierenden Bereich der Kavität 11 wird vor dem Einspritzen der Kunststoffschmelze eine wie in Figur 2 gezeigte Metallhülse 30 eingelegt. Die Metallhülse 30 wird vom Kunststoff umspritzt und verstärkt im fertigen Rahmen 20 das Steuerrohr.

Wie in Figur 2 erkennbar ist, weist die Hülse 30 eine radiale Öffnung 31 auf. Die Hülse 30 wird im Rahmen des Verfahrens so in der Kavität 10 positioniert, dass die Öffnung 31 dem Bereich der Kavität 11 zugewandt ist, der zu dem Unterrohr 22 des Rahmens 20 korrespondiert. So werden der Fluss der Kunststoffschmelze und der Fluss des Fluids nicht durch die Hülse 30 behindert.

Der Fluss des Fluids im Rahmen der gezeigten Verfahrensführung lässt sich anhand des in Figur 3 eingezeichneten Verlaufswegs V1 erkennen.

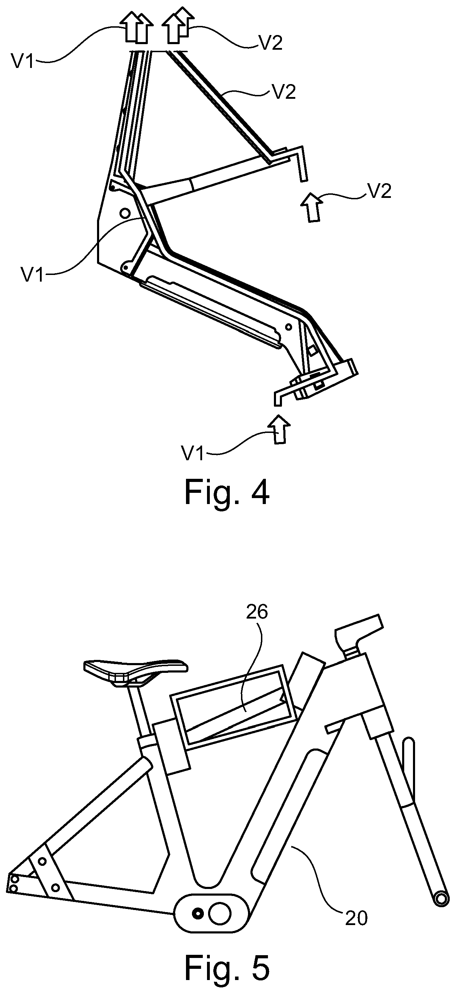

In Figur 4 lässt sich eine Erweiterung des eben beschriebenen Verfahrens erkennen, in dem ein Sitzrohr 24 aus Kunststoff als Einlegeteil in die (in Figuren 1a oder 1b nicht dargestellte Bereiche) der Kavität eingelegt wird. Am oberen Ende des Sitzrohres 24 befinden sich weitere Einspritzdüsen für Kunststoff und Fluid und das Sitzrohr weist eine radiale Öffnung auf, die den zu Sitzstreben 25 korrespondierenden Bereichen der Kavität (in Figuren 1a oder 1b nicht dargestellt) korrespondieren. Es ergeben sich zwei getrennte Fluidflüsse V1 und V2, die in der Figur 4 eingezeichnet sind, wobei der Fluidfluss V1 demjenigen entspricht, der bereits in der Variante der Figur 3 gezeigt ist. Das Sitzrohr 24 kann auch vollständig mit Kunststoff umspritzt werden, indem ein Bereich der Kavität das Kunststoff-Einlegeteil umgibt und Kunststoff in den Spalt zwischen den Wänden der Kavität und dem Einlegeteil gespritzt wird.

Figur 5 veranschaulicht schematisch die Möglichkeit, im Rahmen eines erfindungsgemäßen Verfahrens einen Bereich der Kavität 11, der zu einem Oberrohr 26 des Rahmens 20 korrespondiert, durch wechselbare Werkzeugeinsätze abzukoppeln. Diese Variante der Erfindung ermöglich es, mit demselben Spritzgießwerkzeug sowohl reguläre Rahmen mit Oberrohr, also z.B. die bei Sport- und Herrenfahrrädern üblichen Diamantrahmen, als auch bei Damenfahrrädern übliche Tiefeinsteiger bzw. Waverahmen zu fertigen. Auch die Position des Oberrohres kann auf diese Weise verändert werden, falls die Kavität zwei zu unterschiedliche positionierten Oberrohren eines Rahmens korrespondierende Bereiche aufweist.

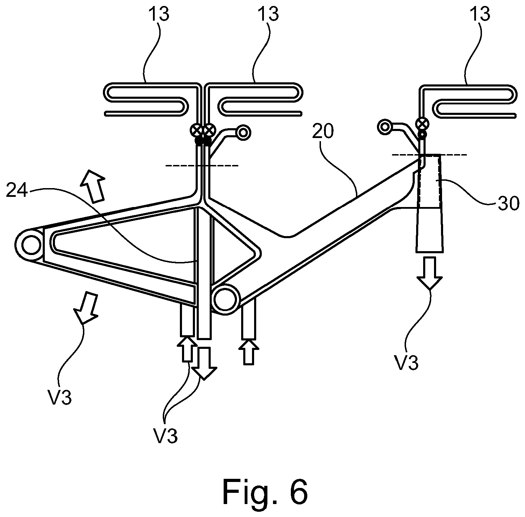

Letztlich zeigt Figur 6 eine alternative Verfahrensführung mit alternativen Flusswegen für die Kunststoffschmelze und das Fluid. In dieser Variante des Verfahrens stellt der hintere Bereich des Unterrohres 22 den tiefsten Punkt des eingeformten Rahmens 20 im Spritzgießwerkzeug 10 dar. Die Einspritzung des Kunststoffs und des Fluids erfolgt entsprechend auch dort. Die Hohlräume in den Einlegeteilen, also in der Hülse 30 und dem Sitzrohr 24, ergänzen in dieser Variante die Flusswege für die Kunststoffschmelze und das Fluid, wie anhand der Flusspfeile V3 zu erkennen ist.

## Patentansprüche

1. Verfahren zur Herstellung eines Zweiradrahmens (20) mit wenigstens einem röhrenförmigen Rahmenbestandteil (21, 22, 23, 24, 25, 26), wobei das Verfahren ein Spritzgießverfahren umfasst, bei dem zunächst eine Schmelze eines thermoplastischen Kunststoffs durch wenigstens einen Kunststoffinjektionspunkt in eine Kavität (11) eines Spritzgießwerkzeugs (10) eingespritzt wird, bevor durch eine anschließende Fluidinjektion durch wenigstens einen Fluidinjektionspunkt ein Teil der Kunststoffschmelze wieder durch wenigstens einen Auslass aus der Kavität (11) verdrängt wird, um den inneren Hohlraum des röhrenförmigen Rahmenbestandteils (21, 22, 23, 24, 25, 26) zu bilden,
**dadurch gekennzeichnet,**
**dass** die Form der Kavität (11) und die Positionen des Auslasses und des Fluidinjektionspunkts am Spritzgießwerkzeug (10) derart sind, dass das Fluid im Rahmen des Verdrängungsvorgangs durchgängig aufwärts fließt.

2. Verfahren nach Anspruch 1, **dadurch gekennzeichnet, dass** die Fluidinjektion die sequentielle Injektion zweier Fluide umfasst, vorzugsweise die sequentielle Injektion eines Gases und einer Flüssigkeit.

3. Verfahren nach einem der vorhergehenden Ansprüche, **dadurch gekennzeichnet, dass** auch der Kunststoffinjektionspunkt am Spritzgießwerkzeug (10) unterhalb des Auslasses für die verdrängte Kunststoffschmelze liegt.

4. Verfahren nach einem der vorhergehenden Ansprüche, **dadurch gekennzeichnet, dass** zumindest ein Teil der Schmelze des thermoplastischen Kunststoffs durch den Auslass für die verdrängte Kunststoffschmelze in die Kavität (11) eingespritzt wird.

5. Verfahren nach einem der vorhergehenden Ansprüche, **dadurch gekennzeichnet, dass** der Zweiradrahmen (20) ein Steuerrohr (21), ein Unterrohr (22) und zwei Kettenstreben (23) aufweist, dass das Fluid im zum Steuerrohr (21) korrespondierenden Bereich in die Kavität (11) eingespritzt wird und dass die verdrängte Kunststoffschmelze durch Auslässe aus der Kavität (11) gedrückt wird, die in den zu den Ausfallenden der Kettenstreben (23) korrespondierenden Bereichen liegen.

6. Verfahren nach einem der Ansprüche 1 bis 4, **dadurch gekennzeichnet, dass** der Zweiradrahmen (20) ein Steuerrohr (21), ein Unterrohr (22), ein Sitzrohr (24), zwei Kettenstreben (23) und zwei Sitzstreben (25) aufweist, dass das Fluid im zum Steuerrohr (21) korrespondierenden Bereich in die Kavität (11) eingespritzt wird und dass die verdrängte Kunststoffschmelze durch wenigstens einen Auslass aus der Kavität (11) gedrückt wird, der in dem zum oberen Ende der Sitzstreben (25) korrespondierenden Bereich liegt.

7. Verfahren nach einem der Ansprüche 5 oder 6, **dadurch gekennzeichnet, dass** das Fluid sequentiell durch die linken und rechten Kettenstreben (23) und gegebenenfalls ferner die linken und rechten Sitzstreben (25) geleitet wird.

8. Verfahren nach einem der Ansprüche 1 bis 4, **dadurch gekennzeichnet, dass** der Zweiradrahmen (20) ein Steuerrohr (21), ein Unterrohr (22), zwei Kettenstreben (23) und einer im Übergangsbereich zwischen dem Unterrohr (22) und den Kettenstreben (23) angeordnetes Tretlager- oder Motoraufnahme aufweist, wobei das Fluid im Bereich der Tretlager- bzw. der Motoraufnahme eingespritzt wird, und wobei vorzugsweise der Auslass im Bereich des Steuerrohres (21) angeordnet ist.

9. Verfahren nach einem der vorhergehenden Ansprüche, **dadurch gekennzeichnet, dass** der Zweiradrahmen (20) eine Aufnahme für einen Akku aufweist, wobei diese Aufnahmen in der Kavität (11) durch einen Kern abgebildet wird, der mit der Kunststoffschmelze umspritzt wird und vorzugsweise anhand eines Kernzugs vor einer Entformung des Zweiradrahmens (20) in eine Richtung normal oder quer zur Öffnungsrichtung des Spritzgießwerkzeugs (10) aus der Kavität (11) gezogen wird.

10. Verfahren nach einem der vorhergehenden Ansprüche, **dadurch gekennzeichnet, dass** der Zweiradrahmen (20) ein Steuerrohr (21) aufweist und dass zur Ausbildung des Steuerrohres (21) ein hohles und vorzugsweise hülsenförmiges Einlegeteil (30) in den zum Steuerrohr (21) korrespondierenden Bereich der Kavität (11) eingelegt und mit der Kunststoffschmelze umspritzt wird.

11. Verfahren nach Anspruch 10, **dadurch gekennzeichnet, dass** das hohle Einlegeteil (30) eine Öffnung aufweist und so in die Kavität (11) eingelegt wird, dass die Öffnung einem Bereich der Kavität (11) zugewandt ist, der zu einem Unterrohr (22) oder einem Oberrohr (26) des Zweiradrahmens (20) korrespondiert.

12. Verfahren nach einem der vorhergehenden Ansprüche, **dadurch gekennzeichnet, dass** der Zweiradrahmen (20) ein Sitzrohr (24) aufweist, das als Einlegeteil (30) in den entsprechenden Bereich der Kavität (11) eingelegt und zumindest teilweise mit der Kunststoffschmelze umspritzt wird.

13. Verfahren nach Anspruch 12, **dadurch gekennzeichnet, dass** das Sitzrohr (24) eine oder mehrere Öffnungen im radialen Umfangsmantel aufweist und so in die Kavität (11) eingelegt wird, dass die Öffnung oder die Öffnungen einem Bereich oder Bereichen der Kavität (11) zugewandt ist bzw. sind, der bzw. die zu einem Unterrohr (22), einem Oberrohr (26), zu Kettenstreben (23) oder zu Sitzstreben (25) des Zweiradrahmens (20) korrespondieren.

14. Verfahren nach Anspruch 13, **dadurch gekennzeichnet, dass** sich ein Fluidinjektionspunkt im Bereich des eingelegten Sitzrohres (24) befindet, vorzugsweise im Bereich nahe des oberen Endes des eingelegten Sitzrohres (24).

15. Verfahren nach einem der vorhergehenden Ansprüche, **dadurch gekennzeichnet, dass** ein Abschnitt des Spritzgießwerkzeugs (10), der denjenigen Bereich der Kavität (11) definiert, der zu einem Oberrohr (26) des Zweiradrahmens (20) korrespondiert, abgekoppelt oder ausgetauscht werden kann, um mit demselben Spritzgießwerkzeug (10) einen Zweiradrahmen (20) ohne Oberrohr (26) zu fertigen oder unterschiedliche Designs des Oberrohres (26) zu realisieren.

## Claims

1. Method for manufacturing a two-wheeled vehicle frame (20) with at least one tubular frame component (21, 22, 23, 24, 25, 26), wherein the method comprises an injection moulding method, in which first a melt of a thermoplastic plastic is injected through at least one plastic injection point into a cavity (11) of an injection moulding tool (10), before by a subsequent fluid injection through at least one fluid injection point a part of the plastic melt is displaced out of the cavity (11) through at least one outlet, in order to form the inner hollow space of the tubular frame component (21, 22, 23, 24, 25, 26),
**characterized in that**
the shape of the cavity (11) and the positions of the outlet and of the fluid injection point on the injection moulding tool (10) are such that the fluid, in the course of the displacement process, continuously flows upwards.

2. Method according to claim 1, **characterized in that** the fluid injection comprises the sequential injection of two fluids, preferably the sequential injection of a gas and a liquid.

3. Method according to any one of the preceding claims, **characterized in that** the plastic injection point on the injection moulding tool (10) is also located below the outlet for the displaced plastic melt.

4. Method according to any one of the preceding claims, **characterized in that** at least a part of the melt of the thermoplastic plastic is injected into the cavity (11) through the outlet for the displaced plastic melt.

5. Method according to any one of the preceding claims, **characterized in that** the two-wheeled vehicle frame (20) comprises a head tube (21), a down tube (22) and two chain stays (23), that the fluid is injected into the cavity (11) in the region corresponding to the head tube (21) and that the displaced plastic melt is pressed out of the cavity (11) through outlets which are located in the regions corresponding to the dropouts of the chain stays (23).

6. Method according to any one of claims 1 to 4, **characterized in that** the two-wheeled vehicle frame (20) comprises a head tube (21), a down tube (22), a seat tube (24), two chain stays (23) and two seat stays (25), that the fluid is injected into the cavity (11) in the region corresponding to the head tube (21) and that the displaced plastic melt is pressed out of the cavity (11) through at least one outlet which is located in the region corresponding to the upper end of the seat stays (25).

7. Method according to any one of claims 5 or 6, **characterized in that** the fluid is guided sequentially through the left and right chain stays (23) and optionally further the left and right seat stays (25).

8. Method according to any one of claims 1 to 4, **characterized in that** the two-wheeled vehicle frame (20) comprises a head tube (21), a down tube (22), two chain stays (23) and a bottom bracket or motor mount arranged in the transition region between the down tube (22) and the chain stays (23), wherein the fluid is injected in the region of the bottom bracket or the motor mount, respectively, and wherein preferably the outlet is arranged in the region of the head tube (21).

9. Method according to any one of the preceding claims, **characterized in that** the two-wheeled vehicle frame (20) comprises a receptacle for a battery, wherein this receptacle is formed in the cavity (11) by a core, which is moulded around with the plastic melt and is preferably pulled out of the cavity (11) by means of a core pull before a demoulding of the two-wheeled vehicle frame (20) in a direction normal or transverse to the opening direction of the injection moulding tool (10).

10. Method according to any one of the preceding claims, **characterized in that** the two-wheeled vehicle frame (20) comprises a head tube (21) and that for forming the head tube (21) a hollow and preferably sleeve-shaped insert part (30) is inserted into the region of the cavity (11) corresponding to the head tube (21) and is moulded around with the plastic melt.

11. Method according to claim 10, **characterized in that** the hollow insert part (30) comprises an opening and is inserted into the cavity (11) such that the opening faces a region of the cavity (11) which corresponds to a down tube (22) or a top tube (26) of the two-wheeled vehicle frame (20).

12. Method according to any one of the preceding claims, **characterized in that** the two-wheeled vehicle frame (20) comprises a seat tube (24) which is inserted as an insert part (30) into the corresponding region of the cavity (11) and is at least partially moulded around with the plastic melt.

13. Method according to claim 12, **characterized in that** the seat tube (24) comprises one or more openings in the radial circumferential shell and is inserted into the cavity (11) such that the opening or the openings faces or face, respectively, a region or regions of the cavity (11) which corresponds or correspond, respectively, to a down tube (22), a top tube (26), to chain stays (23) or to seat stays (25) of the two-wheeled vehicle frame (20).

14. Method according to claim 13, **characterized in that** a fluid injection point is located in the region of the inserted seat tube (24), preferably in the region near the upper end of the inserted seat tube (24).

15. Method according to any one of the preceding claims, **characterized in that** a section of the injection moulding tool (10), which defines that region of the cavity (11) which corresponds to a top tube (26) of the two-wheeled vehicle frame (20), can be decoupled or exchanged in order to manufacture, with the same injection moulding tool (10), a two-wheeled vehicle frame (20) without a top tube (26) or to realise different designs of the top tube (26).

## Revendications

1. Procédé de fabrication d'un cadre de véhicule à deux roues (20) avec au moins un composant de cadre tubulaire (21, 22, 23, 24, 25, 26), dans lequel le procédé comprend un procédé de moulage par injection, dans lequel tout d'abord une masse fondue d'une matière plastique thermoplastique est injectée à travers au moins un point d'injection de plastique dans une cavité (11) d'un outil de moulage par injection (10), avant que, par une injection de fluide subséquente à travers au moins un point d'injection de fluide, une partie de la masse fondue de plastique soit à nouveau déplacée hors de la cavité (11) à travers au moins une sortie, afin de former l'espace creux intérieur du composant de cadre tubulaire (21, 22, 23, 24, 25, 26),
**caractérisé en ce que**
la forme de la cavité (11) et les positions de la sortie et du point d'injection de fluide sur l'outil de moulage par injection (10) sont telles que le fluide, dans le cadre du processus de déplacement, s'écoule continuellement vers le haut.

2. Procédé selon la revendication 1, **caractérisé en ce que** l'injection de fluide comprend l'injection séquentielle de deux fluides, de préférence l'injection séquentielle d'un gaz et d'un liquide.

3. Procédé selon l'une quelconque des revendications précédentes, **caractérisé en ce que** le point d'injection de plastique sur l'outil de moulage par injection (10) est également situé en dessous de la sortie pour la masse fondue de plastique déplacée.

4. Procédé selon l'une quelconque des revendications précédentes, **caractérisé en ce que** au moins une partie de la masse fondue de la matière plastique thermoplastique est injectée dans la cavité (11) à travers la sortie pour la masse fondue de plastique déplacée.

5. Procédé selon l'une quelconque des revendications précédentes, **caractérisé en ce que** le cadre de véhicule à deux roues (20) comprend un tube de direction (21), un tube diagonal (22) et deux bases (23), **en ce que** le fluide est injecté dans la cavité (11) dans la région correspondant au tube de direction (21) et **en ce que** la masse fondue de plastique déplacée est poussée hors de la cavité (11) par des sorties qui sont situées dans les régions correspondant aux pattes de cadre des bases (23).

6. Procédé selon l'une quelconque des revendications 1 à 4, **caractérisé en ce que** le cadre de véhicule à deux roues (20) comprend un tube de direction (21), un tube diagonal (22), un tube de selle (24), deux bases (23) et deux haubans (25), **en ce que** le fluide est injecté dans la cavité (11) dans la région correspondant au tube de direction (21) et **en ce que** la masse fondue de plastique déplacée est poussée hors de la cavité (11) par au moins une sortie qui est située dans la région correspondant à l'extrémité supérieure des haubans (25).

7. Procédé selon l'une quelconque des revendications 5 ou 6, **caractérisé en ce que** le fluide est guidé séquentiellement à travers les bases gauche et droite (23) et éventuellement en outre les haubans gauche et droit (25).

8. Procédé selon l'une quelconque des revendications 1 à 4, **caractérisé en ce que** le cadre de véhicule à deux roues (20) comprend un tube de direction (21), un tube diagonal (22), deux bases (23) et un boîtier de pédalier ou logement de moteur agencé dans la région de transition entre le tube diagonal (22) et les bases (23), dans lequel le fluide est injecté dans la région du boîtier de pédalier ou du logement de moteur, respectivement, et dans lequel de préférence la sortie est agencée dans la région du tube de direction (21).

9. Procédé selon l'une quelconque des revendications précédentes, **caractérisé en ce que** le cadre de véhicule à deux roues (20) comprend un logement pour une batterie, dans lequel ce logement est formé dans la cavité (11) par un noyau, qui est surmoulé avec la masse fondue de plastique et est de préférence tiré hors de la cavité (11) au moyen d'un tiroir avant un démoulage du cadre de véhicule à deux roues (20) dans une direction normale ou transversale à la direction d'ouverture de l'outil de moulage par injection (10).

10. Procédé selon l'une quelconque des revendications précédentes, **caractérisé en ce que** le cadre de véhicule à deux roues (20) comprend un tube de direction (21) et **en ce que** pour la formation du tube de direction (21) un insert creux et de préférence en forme de manchon (30) est inséré dans la région de la cavité (11) correspondant au tube de direction (21) et est surmoulé avec la masse fondue de plastique.

11. Procédé selon la revendication 10, **caractérisé en ce que** l'insert creux (30) comprend une ouverture et est inséré dans la cavité (11) de telle sorte que l'ouverture est tournée vers une région de la cavité (11) qui correspond à un tube diagonal (22) ou à un tube supérieur (26) du cadre de véhicule à deux roues (20).

12. Procédé selon l'une quelconque des revendications précédentes, **caractérisé en ce que** le cadre de véhicule à deux roues (20) comprend un tube de selle (24) qui est inséré en tant qu'insert (30) dans la région correspondante de la cavité (11) et est au moins partiellement surmoulé avec la masse fondue de plastique.

13. Procédé selon la revendication 12, **caractérisé en ce que** le tube de selle (24) comprend une ou plusieurs ouvertures dans l'enveloppe circonférentielle radiale et est inséré dans la cavité (11) de telle sorte que l'ouverture ou les ouvertures est ou sont, respectivement, tournée ou tournées vers une ou des régions de la cavité (11) qui correspond ou correspondent, respectivement, à un tube diagonal (22), un tube supérieur (26), à des bases (23) ou à des haubans (25) du cadre de véhicule à deux roues (20).

14. Procédé selon la revendication 13, **caractérisé en ce que** un point d'injection de fluide est situé dans la région du tube de selle inséré (24), de préférence dans la région proche de l'extrémité supérieure du tube de selle inséré (24).

15. Procédé selon l'une quelconque des revendications précédentes, **caractérisé en ce que** une section de l'outil de moulage par injection (10), qui définit la région de la cavité (11) qui correspond à un tube supérieur (26) du cadre de véhicule à deux roues (20), peut être découplée ou échangée afin de fabriquer, avec le même outil de moulage par injection (10), un cadre de véhicule à deux roues (20) sans tube supérieur (26) ou de réaliser différents designs du tube supérieur (26).
